Europäisches Patentamt

European Patent Office (11) Numéro de publication: **0 100 291**

Office européen des brevets **B1**

(19)

(12) **FASCICULE DE BREVET EUROPÉEN**

(45) Date de publication du fascicule du brevet: **15.10.86**

(51) Int. Cl.⁴: **B 23 Q 7/14**, B 23 Q 39/04

(21) Numéro de dépôt: **83420135.2**

(22) Date de dépôt: **22.07.83**

(54) **Machine automatique d'usinages, à grand rendement, mettant en oeuvre un procédé cyclique d'opérations d'usinages et de translations combinées.**

(30) Priorité: **27.07.82 FR 8213442**

(43) Date de publication de la demande:
**08.02.84 Bulletin 84/6**

(45) Mention de la délivrance du brevet:
**15.10.86 Bulletin 86/42**

(84) Etats contractants désignés:
**AT BE CH DE GB IT LI NL SE**

(56) Documents cité:
**CH-A-541 389**
**DE-A-2 920 801**
**FR-A-1 066 428**
**US-A-1 790 943**

**MACHINE PRODUCTION, no. 116, 25 juin 1975, pages 20-23, Sofetec, Boulogne/Seine, FR. "CU: une autre façon de concevoir l'usinage" WERKSTATT UND BETRIEB, vol. 108, no. 4, avril 1975, pages 205-206, Munich, DE. H. FISCHER: "Kostensenkende kombinierte Bohr- und Gewindebohr-Einheiten"**

(73) Titulaire: **Manufacture de Vilebrequins de Lorette - MAVILOR - (société anonyme), L'Horme, F-42400 Saint- Chamond (FR)**

(72) Inventeur: **Coquillart, Michel, 14 rue de Patroa, F-42100 Saint- Etienne (FR)**
Inventeur: **Yeretzian, Jacques, 10 boulevard François Delay, F-42400 Saint- Chamond (FR)**

(74) Mandataire: **Dupuis, François, Cabinet Charras 3 Place de l'Hôtel- de- Ville, F-42000 St.Etienne (FR)**

LIBER, STOCKHOLM 1986

## Description

L'invention se rattache au secteur technique des machines automatiques d'usinages.

On connaît déjà, d'une part, des machines spéciales qui sont conçues et réalisées pour exécuter automatiquement en grande production, une série d'opérations d'usinages. Ce sont des machines du genre transfert, ou multibroches comme celle qui a fait l'objet du brevet suisse CH-A 41 389, qui sont relativement compliquées et onéreuses et qui nécessitent des outillages importants, spécifiques aux pièces à usiner. On connaît déjà, d'autre part, des centres d'usinages travaillant généralement en monobroche et pouvant réaliser une seule opération simultanément. L'opération suivante nécessite un changement d'outil sur la broche. Pour résoudre les problèmes liés à une grande production, il faut mettre en oeuvre soit une machine transfert qui est onéreuse et nécessite un temps de changement des outillages spécifiques très long, soit plusieurs centres d'usinage, chacun avant une productivité relativement faible. Dans tous les cas, les investissements sont considérables et on est limité par certaines contraintes telles que l'impossibilité d'employer des moyens de perçage rapide sur les unités multibroches d'usinage, le manque de souplesse et les délais pour passer d'un type de pièce à usiner à un autre type de pièce...

La présente invention a pour but de remédier ces inconvenients. L'invention telle qu'elle est définie dans les revendications, résout le problème consistant à créer une machine automatique d'usinage dont le coût permet de réduire les investissements dans un rapport de 4 à 1 environ, pour une production et un rendement analogues à celui des machines existantes.

Cette machine automatique d'usinages conforme à l'invention met en oeuvre un procédé cyclique d'opérations d'usinages et de translation combinées, dans lequel:

- on monte en alignement des unités de travail monobroches, fixes, bien positionnées entre elles avec un même espacement très précis entre les axes des broches d'usinages;

- pour l'organisation de ce montage des unités de travail monobroches, compte tenu du nombre et de la nature des opérations d'usinage à exécuter sur les pièces on détermine le nombre d'unités de travail monobroches à mettre en oeuvre par la relation 2N-1, dans laquelle N représente le nombre d'opérations d'usinage à exécuter sur ces pièces, de sorte que l'on met en oeuvre un nombre impair d'unités de travail monobroches et qu'il y a dans tous les cas, une unité centrale de part et d'autre de laquelle est monté un même nombre d'unités;

- on équipe l'unité centrale de façon que sa broche exécute la dernière opération d'usinage n° N; d'un côté de l'unité centrale, en progressant à partir de celle-ci, on équipe les unités pour effectuer les opérations N-1, N-2; de l'autre côté de l'unité centrale en progressant à partir de celle-ci, on équipe les unités pour effectuer les opérations 1, 2... jusqu'à N-1, de cette façon, en les parcourant dans le même sens on trouve que les configurations d'un côté et de l'autre de l'unité centrale, sont identiques;

- on déplace en translation-transfert dans un même plan et par rapport aux unités de travail monobroches une table ou un plateau portant autant de dispositifs de positionnement des pièces à usiner qu'il y a d'opérations à exécuter sur cea pièces, les axes de positionnement des pièces étant séparés par les mêmes espaces précis et rigoureusement égaux correspondant aux entraxes des broches des unités de travail monobroches;

- on déplace en translation la ou les pièces à usiner devant les unités de travail monobroches, d'une manière automatique et selon un ordre séquentiel préétabli, en liaison synchronisée avec les commandes successives des unités de travail;

- on met en oeuvre un système de manutention des pièces à usiner qui, successivement, met en place chacune des pièces sur un des dispositifs de positionnement, et qui la retire à la fin de l'usinage, le système de manutention agissant essentiellement à cet effet, dans la zône de l'unité centrale qui exécute toujours la dernière opération d'usinage.

La machine automatique faisant l'objet de la présente invention comprend un banc fixe (1) ou support équivalent, sur lequel sont montées fixement des unités de travail monobroches (3, 4, 5, 6, 7) dont les axes entre les broches sont separés par des intervalles identiques très précis (a), une table ou plateau (8) monté et équipé avec des moyens pour être mobile en translation, ainsi que des moyens de manutention (14) pour mettre successivement en place les pièces à usiner et pour les enlever à la fin de leur usinage. Elle est caractérisée en ce que le nombre d'unites de travail est impair et égal à deux fois celui des opérations d'usinage à exécuter moins un, l'unité centrale (5) executant la dernière opération d'usinage, la ou les unités (3, 4 et 6, 7) de part et d'autre de l'unité centrale, étant destinées à exécuter, d'une manière alternée, les autres operations d'usinage de la pièce, la table ou plateau (8) se déplaçant selon un ordre séquentiel préétabli par rapport aux unités de travail monobroches, des dispositifs (9, 11, 12) ou moyens de positionnement des pièces à exécuter dont le nombre correspond au nombre d'opérations à executer sur les pièces et dont les intervalles (b) entre les axes desdits dispositifs (9, 11, 12) de positionnement sont précis et égaux entre eux ainsi qu'aux intervalles entre les axes des broches des unités de travail, les moyens de manutention (14) agissant essentiellement dans la zone de l'unité central (5) qui exécute la dernière opération d'usinage.

L'invention est exposée ci-après plus en détail à l'aide de dessins représentant seulement un mode d'exécution.

La figure 1 représente une vue en plan à caractère schématique, illustrant la machine automatique conformément à l'invention dans une application à l'usinage de faces en bout de vilebrequin.

La figure 2 représente une vue de face suivant la ligne 2-2 de la figure 1.

La figure 3 représente une vue suivant la ligne 3-3 de la figure 1, montrant les unités monobroches.

La figure 4 représente une vue suivant la ligne 4-4 de la figure 1, montrant les dispositifs de positionnement de pièces de révolution et un exemple de moyen de manutention des pièces.

La figure 5 représente une vue considérée suivant la ligne 5-5 de la figure 1, montrant des moyens de fixation et d'entraînement en rotation des pièces.

La figure 6 représente une vue en coupe partielle à plus grande échelle montrant un exemple d'opérations réalisées sur une extrémité de vilebrequin.

La figure 7 représente une vue en plan correspondant à la figure 6.

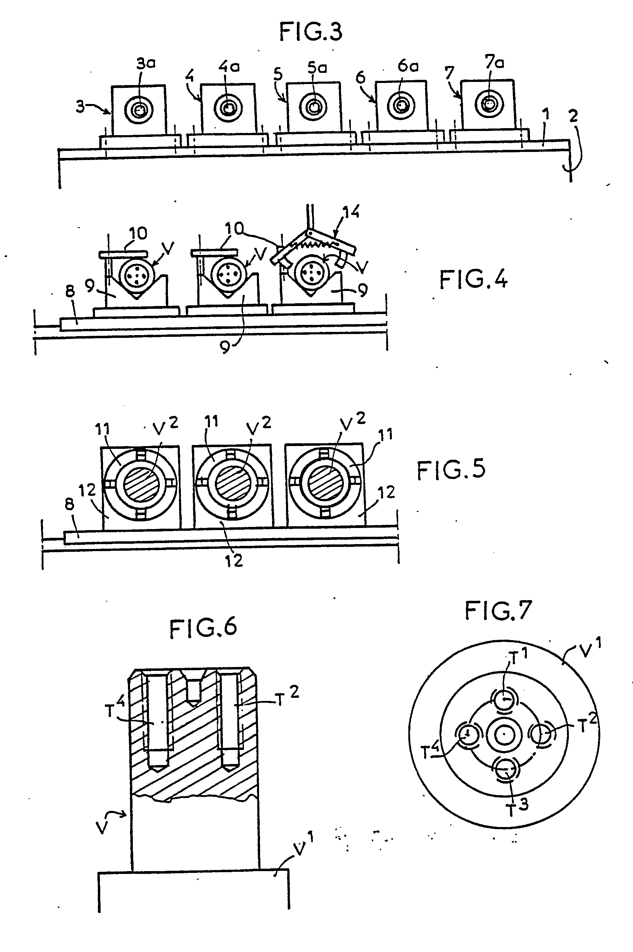

Les figures 6 à 13 représentent des vues en plan très schématiques illustrant une partie du cycle de travail de la machine selon les figures précédentes.

Conformément à la présente invention, la machine automatique d'usinage comprend essentiellement, un banc fixe (1) ou support équivalent, porté par un bâti (2) et sur lequel sont montées en alignement et de manière fixe des unités de travail monobroches (3, 4, 5, 6, 7) dont les axes entre les broches sont séparés par des intervalles (a) identiques et très précis.

Les unités monobroches sont généralement en nombre impair. Dans l'exemple non limitatif illustré, il y a cinq unités pour réaliser 3 opérations, mais il est bien évident que ce nombre peut être différent 3, 7, 9..., suivant les besoins.

L'unité centrale (5) est équipée pour réaliser la troisième et dernière opération d'usinage sur une pièce, tandis que les unités latérales (3, 4) et (6, 7) sont équipées pour réaliser d'une manière alternée, les autres opérations d'usinage de la pièce.

Dans l'exemple des dessins la machine est destinée à réaliser des perçages des taraudages, des chambrages, des chanfreins ou des alésages, sur la face en bout d'un vilebrequin.

Dans le cas représenté, cet usinage comporte quatre trous taraudés équidistants (T1, T2, T3, T4) exécutés en bout du vilebrequin (V), comme illustré aux figures 6 et 7.

Dans ce cas, l'unité centrale (5) est équipée d'un taraud (5a) pour effectuer la dernière opération (taraudage), tandis que les unités latérales (3 et 6) sont équipées d'un foret de perçage (3a et 6a) et les unités latérales (4 et 7) sont équipées d'un outil de chambrage, de chanfreinage ou d'alésage (4a et 7a).

En face des unités monobroches et suivant un plan déterminé les vilebrequins (V) ou autres pièces à usiner sont positionnés sur une table ou plateau (6) qui est monté et équipé par tous moyens connus, pour être mobile en translations alternatives selon un axe perpendiculaire au sens de déplacement des broches.

Le plateau (6) doit être dimensionné en largeur pour recevoir dans l'exemple illustré, trois vilebrequins espacés entre eux d'un intervalle (b) précis et égal à l'intervalle (a) entre les broches, et en longueur pour assurer le positionnement de vilebrequins de grande longueur.

Du côté de l'extrémité à usiner, les vilebrequins sont positionnés en butée par une portée de paliers (V 1) dans des supports en Vé (9) ou des demi-bagues, et sont maintenus par tous moyens de serrage pneumatique ou hydraulique tels que les brides articulées (10) illustrées à la figure 4. Pour éviter l'usure des supports, on peut prévoir un dispositif d'allégement par film d'huile ou autre moyen, pendant la rotation des pièces.

A l'opposé, les vilebrequins sont montés par leur plateau (V 2) dans un dispositif de centrage et de serrage approprié, du type mandrin (11) par exemple.

Pour effectuer les opérations de perçage, chambrage et taraudage sur les quatre trous, il est nécessaire de prévoir des rotations successives des vilebrequins. A cet effet, les mandrins (11) sont associés à un diviseur à trois sorties ou à des diviseurs (12), pour permettre la rotation sur 360 degrés commandés périodiquement suivant le cycle prévu. Le positionnement angulaire de départ, s'il y a lieu, est réalisé par tous moyens connus tels que mâchoires autocentrantes escamotables.

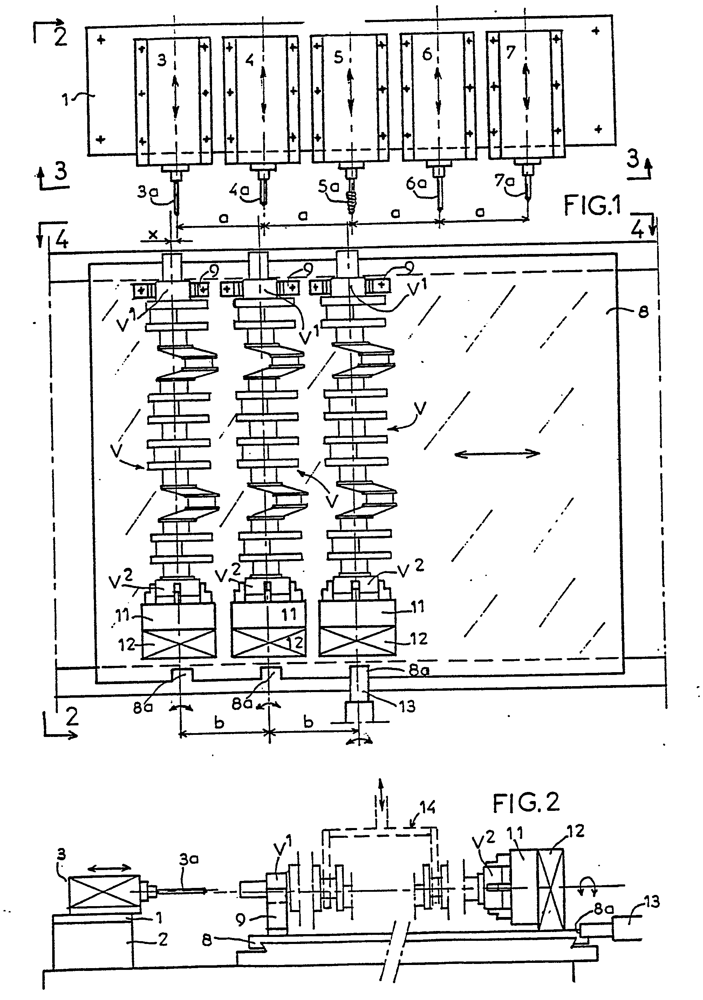

Le plateau (6), déplaçable en translations alternatives, doit encore être indexé fermement dans les positions correspondant à un usinage (trois positions dans l'exemple illustré). Pour cela, on a prévu par exemple un doigt (13) manoeuvré par tous moyens pour passer d'une position arrière ou escamotée selon laquelle le plateau est libre, à une position avant ou d'indexage du plateau par pénétration du doigt dans une des entailles correspondantes (6a) du plateau (figures 1 et 2).

On prévoit encore un moyen de chargement et de déchargement des vilebrequins lorsqu'ils sont placés en face de l'unité centrale (5). On a symbolisé ce moyen par les pinces (14) aux figures 2 et 4, étant entendu que tous types d' organes de préhension et de transport appropriés, peuvent être adaptés.

D'une manière importante, il faut souligner que le nombre d'unités de travail monobroches est déterminé par la relation 2N-1 dans laquelle N représente le nombre d'opérations d'usinage du même type à exécuter sur les pièces. De la sorte on met en oeuvre un nombre impair d'unités de travail et il y a dans tous les cas une unité centrale exécutant la dernière opération de part et d'autre de laquelle est placé un même nombre d'unités.

A noter encore que le nombre de pièces en travail est toujours égal au nombre d'opérations de même type à effectuer.

Bien entendu les déplacements en translations alternatives du plateau (8) ainsi que le contrôle des positions, peuvent être asservis par une commande numérique de manière à pouvoir règler un décalage d'origine correspondant au rayon de perçage, et les différentes courses suivant le cycle de travail. L'indexation angulaire des pièces pour l'usinage trou par trou s'opère également par commande numérique du ou des diviseurs (12).

De même, on peut également mettre en oeuvre une commande numérique de chaque unité de travail monobroche, pour assurer les cycles de travail et les vitesses convenables des outils.

En variante, on peut concevoir la machine avec l'unité centrale fictive. La position de la pièce en face de cet emplacement ne servant alors qu'au chargement et au déchargement. Dans ce cas le nombre d'unités est égal à deux fois le nombre d'opérations à effectuer.

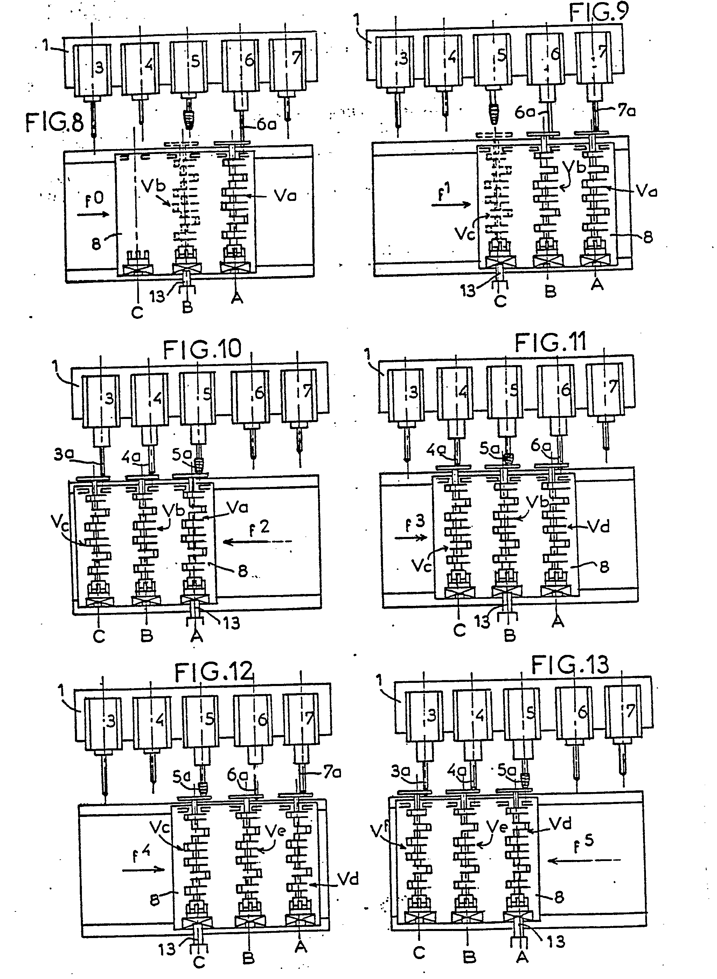

On décrit maintenant, en se référant aux figures 8 à 13 le cycle de fonctionnement de la machine selon l'invention, dans son application à titre d'exemple seulement, à l'usinage sur une face en bout de vilebrequins, usinage comprenant des perçages des chambrages et des taraudages de quatre trous équidistants à l'aide des cinq unités monobroches (3, 4, 5, 6 et 7) et du plateau (8) à trois positions ou postes ci-après dénommés (A, B, C).

Le plateau (8) est amené et indexé dans la position où le poste (A) est situé en face de l'unité centrale (5), avec un décalage (x) correspondant au rayon de perçage des trous. Un premier vilebrequin (Va) est positionné au poste (A) et calé angulairement (figure 8). Le plateau (8) est déplacé suivant flèche (Fo) pour que le poste (A) soit en face de l'unité (6), avec le décalage (x). L'unité (6) est mise en action pour effectuer le perçage avant chanfreinage et taraudage, sur un premier trou. Après recul de la broche, le diviseur (12) deplace en rotation suivant 90 degrés le vilebrequin, et le deuxième trous est percé. On procède ainsi pour les deux autres trous. A la fin du perçage un deuxième vilebrequin (Vb) est positionné au poste (B) du plateau (traits interrompus, figure 8) et le plateau (8) est déplacé selon flèche (F1) pour l'amener et l'indexer dans la position (avec décalage x) où le poste (A) est en face de l'unité (7) et le poste (B) en face de l'unité (6).

Dans cette position, illustrée à la figure 9, on met en action les unités (6 et 7) pour effectuer simultanément les perçages sur le vilebrequin (Vb) et les chambrages d'entrée sur le vilebrequin (Va).

A la fin de l'opération, un troisième vilebrequin (Vc) est positionné au poste (C), puis le plateau (8) est déplacé selon flèche (F2) pour l'amener et l'indexer dans la position (avec décalage x) où les postes (A, B, C) sont respectivement en face des unités (5, 4 et 3). Dans cette position illustrée figure 10, on effectue simultanément les perçages sur le vilebrequin (Vc) les chambrages d'entrée sur le vilebrequin (Vb) et les taraudages sur le vilebrequin (Va).

A la fin de l'opération le vilebrequin (Va) qui est terminé, est enlevé par le dispositif de déchargement et un quatrième vilebrequin (Vd) est positionné au poste (A).

Le plateau (8) est ensuite déplacé pour l'amener et l'indexer dans la position de départ flèche (F3), dans laquelle les postes (A, B et C) sont respectivement en face (avec décalage x) des unités (6, 5 et 4). Dans cette position (figure 11) on effectue simultanément les perçages sur le vilebrequin (Vd), les taraudages sur le vilebrequin (Vb) et les chambrages sur le vilebrequin (Vc). A la fin de l'opération le deuxième vilebrequin (Vb) également terminé est enlevé et remplacé par un cinquième vilebrequin (Ve) et le plateau (8) est déplacé selon flèche (F4), figure 12 pour l'amener et l'indexer dans la position suivant laquelle sont effectués simultanément les taraudages sur le vilebrequin (Vc) par l'unité (5), les perçages sur le vilebrequin (Ve) par l'unité (6) et les chambrages sur le vilebrequin (Vd) par l'unité (7).

A la fin de l'opération le vilebrequin (Vc) est enlevé et remplacé par un sixième vilebrequin (Vf), puis le plateau est déplacé (selon flèche F5 figure 13) pour opérer simultanément les perçages sur (Vf) les chambrages sur (Ve) et les taraudages sur (Vd). Le cycle continue ainsi, jusqu'à épuisement des pièces.

A noter encore que le temps d'usinage varie selon les unités et leur travail. On aligne les temps de chaque opération sur la plus longue.

Les avantages ressortent bien de la description, on souligne encore
- la simplicité des moyens utilisés et leur rendement élevé du fait de l'emploi d'organes de perçage rapide (impossible dans les multibroches et les centres d'usinage) et du fait que l'on travaille sur plusieurs pièces simultanément (autant de pièces qu'il y a d'opération), avec remplacement d'une pièce finie, toujours au même poste, par manutention automatique rapide;
- la facilité d'adaptation de la machine à des opérations différentes sur des pièces diverses, sans outillage spécifique onéreux. Il suffit de changer les outils, d'interchanger les moyens de positionnement des pièces et de régler les commandes numériques et éventuellement les cycles des unités;
- la qualité du travail par l'utilisation des commandes numériques synchronisées pour les dimensions et positions des usinages à réaliser l'ordre des opérations. A noter encore que les trous taraudés peuvent être exécutés soit sur des rayons différents en modifiant la côte (x), soit à des angles différents en modifiant les réglages annulaires du diviseur; ces modifications sont données par la commande numérique.

**Revendications**

- 1 - Procédé cyclique d'opérations d'usinages et de translations combinées, dans lequel:

- on monte en alignement des unités de travail monobroches, fixes (3, 4, 5, 6 et 7), bien positionnées entre elles, avec un même espacement (a), très précis, entre les axes des broches d'usinages;

- pour l'organisation de ce montage des unités de travail monobroches, compte-tenu du nombre et de la nature des opérations d'usinage à executer sur les pièces, on détermine le nombre d'unités de travail monobroches à mettre en oeuvre, par la relation 2N-1, dans laquelle N represente le nombre d'operations d'usinage à executer sur les pièces, de sorte que l'on met en oeuvre un nombre impair d'unités de travail monobroches et qu'il y a, dans tous les cas, une unité centrale (5) de part et d'autre de laquelle est monté un même nombre d'unités:

- on équipe l'unité centrale (5) de façon que sa broche execute la dernière operation d'usinage n° N; d'un côté de l'unité centrale en progressant à partir de celle-ci, on equipe les unités pour effectuer les opérations N-1, N-2...; de l'autre côté de l'unité centrale, en progressant à partir de celle-ci, on equipe les unités pour effectuer les operations 1, 2... jusqu'à N-1; de cette façon, en les parcourant dans le même sens, on trouve que les configurations d'un côté et de l'autre de l'unité centrale, sont identiques;

- on déplace en translation-transfert dans un même plan et par rapport aux unités de travail monobroches, une table ou un plateau (8) portant autant de dispositifs de positionnement des pièces à usiner qu'il y a d'opérations à exécuter sur ces pièces, les axes de positionnement des pièces étant séparés par des espaces (b) précis et rigoureusement égaux, correspondant aux entr'axes (a) des broches des unités de travail monobroches:

- on déplace en translation la ou les pièces à usiner devant les unités de travail monobroches, d'une manière automatique et selon un ordre sequentiel préétabli, en liaison synchronisée avec les commandes successives des unités de travail;

- on met en oeuvre un système de manutention (14) des pièces à usiner qui, successivement, met en place chacune des pièces sur un des dispositifs de positionnement et qui la retire à la fin de l'usinage, le système de manutention agissant essentiellement à cet effet, dans la zone de l'unité centrale (5) qui exécute toujours la dernière operation d'usinage.

- 2 - Machine automatique d'usinages, comprenant un banc fixe (1) ou support equivalent, sur lequel sont montées fixement des unités de travail monobroches (3, 4, 5, 6, 7) dont les axes entre les broches sont separés par des intervalles identiques très précis (a), une table ou plateau (8) monté et équipé avec des moyens pour être mobile en translation, ainsi que des moyens de manutention (14) pour mettre successivement en place les pièces à usiner et pour les enlever à la fin de leur usinage, caractérisé en ce que le nombre d'unités de travail est impair et égal à deux fois celui des operations d'usinage à exécuter moins un, l'unité centrale (5) exécutant la dernière opération d'usinage, la ou les unités (3, 4 et 6, 7) de part et d'autre de l'unité centrale, étant destinées à exécuter, d'une manière alternée, les autres operations d'usinage de la pièce, la table ou plateau (8) se deplaçant selon un ordre sequentiel préétabli par rapport aux unités de travail monobroches, des dispositifs (9, 11, 12) ou moyens de positionnement des pièces à exécuter dont le nombre correspond au nombre d'opérations à exécuter sur les pièces et dont les intervalles (b) entre les axes desdits dispositifs (9, 11, 12) de positionnement sont precis et égaux entre eux ainsi qu'aux intervalles entre les axes des broches des unités de travail, les moyens de manutention (14) agissant essentiellement dans la zone de l'unité centrale (5) qui exécute la dernière operation d'usinage.

- 3 - Procédé d'usinage selon la revendication 1, caractérisé en ce que l'usinage selon ordre séquentiel préétabli suivant lequel sont combinées des translations alternées de la table ou plateau (8) et des pièces positionnées par rapport aux unités de travail (3, 4, 5, 6, 7), afin que, après une phase de mise en place des pièces à tous les emplacements de positionnements de la table, on usine simultanément autant de pièces différentes qu'il y a d'opérations d'usinage pour une pièce, une pièce étant terminée par l'unité centrale (5) et une autre mise en place lors de chaque déplacement séquentiel à partir du Nième déplacement (N = nombre d'opérations à exécuter par pièce).

- 4 - Machine selon la revendication 2, caractérisée en ce que les déplacements séquentiels en translation alternative du plateau (8) et son indexation à chaque poste, sont assurés par une commande numérique, de manière à pouvoir règler un décalage correspondant au rayon de perçage ou autre opération.

- 5 - Machine selon la revendication 2, caracterisée en ce que les indexations du plateau (8) à chaque poste de travail, sont obtenues par un dispositif escamotable du type doigt (13), manoeuvré par tous moyens pour coopérer avec des entailles (8a) du plateau ou pour en échapper.

- 6 - Machine selon la revendication 2, caractérisée en ce que les broches des unités monobroches (3, 4, 5, 6, 7) sont deplacées en translation alternatives par une commande numérique couplée et synchronisée avec la commande numérique du plateau (8) selon le cycle de travail déterminé.

- 7 - Machine selon la revendication 2, caracterisée en ce que lorsque plusieurs opérations sont effectuées sur chaque pièce par la même unité de travail, les pièces sont commandées en rotation par un ou des diviseurs d'entraînement (12) à commande numérique couplée et synchronisée avec les autres commandes numériques selon le cycle determiné.

- 8 - Machine selon la revendication 2, appliquée à des usinages sur des vilebrequins (V), caractérisée en ce que lesdits vilebrequins sont positionnés en butée sur le plateau (8), par l'intermediaire d'un support tel qu'un Vé ou une demi-bague (9) sur lequel s'appuie à roulement une portée (V1) de palier du vilebrequin proche de la face à usiner, tandis qu'à l'autre extrémité, le vilebrequin est monté par son plateau (V2) dans un mandrin (11) relié éventuellement aux diviseurs (12).

- 9 - Machine selon la revendication 8. caractérisée en ce que les portées (V1) des vilebrequins posées dans leur support (9) sont maintenues par des moyens de serrage pneumatique ou hydraulique tels que brides (10) articulées aux supports et déplacées selon le cycle déterminé.

- 10 - Machine automatique d'usinages selon la revendication 2, caractérisée en ce que les unités de travail sont réparties également de part et d'autre d'une unité centrale fictive en emplacement median, destinée seulement au chargement et au dechargement des pièces.

## Patentansprüche

- 1 - Zyklisches Verfahren für kombinierte Bearbeitungs- und Verlagerungsarbeitsvorgänge, in welchem:

- feststehende, richtig zwischenpositionierte, einspindelige Arbeitseinheiten (3, 4, 5, 6, und 7) mit demselben, sehr genauen Abstand (a) zwischen den Mittellinien der Bearbeitungsspindeln in einer Richtlinie montiert werden;

- für die Organisation dieser Montierung der einspindeligen Arbeitseinheiten, und unter Berücksichtigung von der Anzahl und der Art der auf die Werkstücke durchzuführenden Arbeitsvorgänge wird die Anzahl der einzusetzenden monospindeligen Arbeitseinheiten durch das Verhältnis 2N-1 bestimmt, in welchem N die Anzahl der auf die Werkstücke durchzuführenden Bearbeitungsvorgänge darstellt, sodass eine ungerade Anzahl der einspindeligen Arbeitseinheiten eingesetzt wird, und dass in jedem Fall eine Mitteleinheit (5) bestehen wird, wobei die gleiche Anzahl der Arbeitseinheiten beiderseitig dieser Mitteleinheit montiert wird;

- die Mitteleinheit (5) so ausgestattet wird, dass derer Spindel den letzten Bearbeitungsvorgang No N durchfuhrt; auf einer Seite der Mitteleinheit und von dieser ab werden die Arbeitseinheiten zur Durchführung der Bearbeitungsvorgänge N-1, N-2... ausgestattet; auf der anderen Seite der Mitteleinheit und von dieser ab werden die Arbeitseinheiten zur Durchführung der Bearbeitungsvorgänge 1, 2... bis zu N-1 ausgestattet, damit es sich bei Besichtigung der Arbeitseinheiten in derselben Richtung herausgibt, dass die Gestaltungen beiderseitig der Mitteleinheit identisch sind;

- ein Arbeitstisch oder eine Arbeitsplatte (8) wird in einer gleichen Ebene und mit Bezug auf die einspindeligen Arbeitseinheiten überführungs- sowie verlegungsweise verlagert und weist Positioniervorrichtungen für die zu bearbeitenden Werkstücke, wobei diese Positioniervorrichtungen in gleicher Anzahl wie die auf die Werkstücke durchzuführenden Bearbeitungsvorgänge vorgesehen sind, und die Positionierungsmittellinien der Werkstücke durch genaue die den Abständen (a) zwischen den Mittellinien der Spindeln der einspindeligen Arbeitseinheiten entsprechen;

- das Werkstück oder die Werkstücke wird oder werden in synchronizierten Verhältnis zu den nacheinanderfolgenden Betätigungen der Arbeitseinheiten automatisch und gemäss einer vorbestimmten zyklischen Reihenfolge vor die einspindeligen Arbeitseinheiten verlagert;

- ein Handlungssystem (14) für die zu bearbeitenden Werkstücke zur nacheinanderfolgenden Positionierung jedes einen der Werkstücke auf die Positioniervorrichtungen und zur abnahme des Werkstücks aus jeder einen Positioniervorrichtung nach Beendigung der Bearbeitung betätigt wird, wobei zu diesem Zweck das Handlungssystem hauptsächlich in dem Bereich der Mitteleinheit (5) tätig wird, die den letzten Bearbeitungsvorgang jeweils ausführt.

- 2 - Automatische Maschine für Bearbeitungen, die ein feststehendes Bett oder einen gleichartigen Trager (1) aufweist, auf welchem die einspindeligen Arbeitseinheiten (3, 4, 5, 6, 7) mit Spindeln feststehend montiert werden, die durch sehr genaue Abstände (a) zwischen den Mittellinien der Spindeln getrennt sind, wobei ein Arbeitstisch oder eine Arbeitsplatte (8) mit Mitteln zur verlegungsweisen Beweglichkeit ausgestattet und montiert wird und Handlungsmittel (14) zur nacheinenderfolgenden Positionierung der zu bearbeitenden Herkstücke und zur Abnahme derselben nach ihrer Fertigbearbeitung vorgesehen sind, dadurch gekennzeichnet, dass die Anzahl der Arbeitseinheiten ungerade und gleich wie zweimal die Anzahl der durchzuführenden Bearbeitungsvorgänge weniger einer ist, wobei die die Mitteleinheit (5) den letzten Bearbeitungsvorgang ausführt, und die Arbeitseinheit oder die Arbeitseinheiten (3, 4 und 6, 7) beiderseitig der Mitteleinheit zur Durchführung in abwechselnder Weise der anderen Bearbeitungsvorgänge für das Werkstück bestimmt sind, dass der Arbeitstisch oder die Arbeitsplatte (8) sich gemäss einer zyklischen, vorbestimmten Reihenfolge mit Bezug auf die einspindeligen Arbeitseinheiten bewegt, und dass für die zu bearbeitenden Werkstücke Positioniervorrichtungen oder Positioniermittel (9, 11, 12) in einer Anzahl vorgesehen sind, die der Anzahl der auf die Werkstücke durchzuführenden Arbeitsvorgänge entspricht, wobei die Abstände (b) zwischen den Mittellinien der besagten Positioniervorrichtungen (9, 11, 12) genau und gleich zwischeneinander sowie gleich wie die Abstände zwischen den Mittellinien der Spindeln der Arbeitseinheiten sind, während die Handlungsmittel (14) hauptsächlich in dem Bereich der Mitteleinheit (5) tätig werden, die den letzten Bearbeitungsvorgang ausführt.

- 3 - Bearbeitungsverfahren nach Anspruch 1, dadurch gekennzeichnet, dass die Bearbeitung entsprechend einer zyklischen, vorbestimmten Reihenfolge durchgeführt wird, gemäss welcher abwechselnde Verlegungen des Arbeitstisches oder der Arbeitsplatte (8) und der mit Bezug auf die Arbeitseinheiten (3, 4, 5, 6, 7) positionierten Werkstücke kombiniert sind, sodass nach einem Einsatzvorgang der Werkstücke bei allen Einsatzstellen des Tisches soviel verschiedene Werkstücke als die Anzahl der für ein Werkstück durchzuführenden Bearbeitungsvorgänge bearbeitet werden, wobei ein Werkstück durch die Mitteleinheit (5) fertigbearbeitet wird und ein anderes Werkstück bei jeder zyklischen Verschiebung von der Nsten Verschiebung ab eingesetzt ist (N = Anzahl der je Werkstück durchzuführenden Arbeitsvorgänge).

- 4 - Maschine nach Anspruch 2, dadurch gekennzeichnet, dass die zyklischen Verschiebungen in abwechselnder Verlegung der Arbeitsplatte (8) und die Teilung derselben bei jeder Arbeitsstelle mittels einer numerischen Steuerung erfolgen, in der Weise, dass es möglich wird, eine dem Radius des Durchbohrenvorgangs oder anderen Arbeitsvorgangs entsprechende Verschiebung einzustellen.

- 5 - Maschine nach Anspruch 2, dadurch gekennzeichnet, dass die Teilungen der Arbeitsplatte (8) bei jeder Arbeitsstelle mittels einer fingerartigen, zurückklapparen Vorrichtung (13) erreicht werden, die durch beliebige bekannte Mittel zum Mitwirken mit Einkerbungen (8a) der Arbeitsplatte oder zum Losmachen aus denselben betätigt wird.

- 6 - Maschine nach Anspruch 2, dadurch gekennzeichnet, dass die Spindeln der einspindeligen Arbeitseinheiten (3, 4, 5, 6, 7) mittels einer numerischen Steuerung in abwechselnder Verlegung verschoben werden, die die mit der numerischen Steuerung der Arbeitsplatte (8) entsprechend dem vorbestimmten Arbeitsablauf gekuppelt und synchronisiert ist.

- 7 - Maschine nach Anspruch 2, dadurch gekennzeichnet, dass die Werkstücke, im Falle einer Vielzahl von auf jedem Werkstück durch dieselbe Arbeitseinheit durchzuführenden Arbeitsvorgängen, durch einen oder mehrere Antriebsteiler (12) mit numerischer Steuerung drehbar angetrieben werden, die mit den anderen numerischen Steuerungen entsprechend dem vorbestimmten Arbeitsablauf gekuppelt und synchronisiert ist.

- 8 - Maschine nach Anspruch 2, in der Verwendung derselben für Bearbeitungen von Kurbelwellen (V), dadurch gekennzeichnet, dass die besagten Kurbelwellen vermittels eines Trägers wie ein Vee oder ein Halbring (9) auf der Arbeitsplatte (8) anschlagschlüssig positioniert sind, wobei eine Lauffläche (VI) des an der zu bearbeitenden Fläche angrenzenden Kurbelwellenlagers drehbar auf den besagten Träger abgestützt wird, während an dem anderen Ende die Kurbelwelle mittels derer Platte (V2) in einem Dorn (11) montiert ist, der nach Bedarf mit den Teilern (12) verbunden wird.

- 9 - Maschine nach Anspruch 8, dadurch gekennzeichnet, dass die in ihren Träger (9) gelegten Laufflächen (VI) der Kurbelwellen mittels pneumatischer oder hydraulischer Einspannvorrichtungen wie die Flansche (10) gehalten werden, die gelenkig mit den Trägern verbunden sind und entsprechend dem vorbestimmten Arbeitsablauf verschoben werden.

- 10 - Automatische Bearbeitungsmaschine nach Anspruch 2, dadurch gekennzeichnet, dass die Arbeitseinheit in gleicher Anzahl beiderseits einer in mittiger Stellung befindlichen, fingierten Mitteleinheit verteilt sind, die nur für die Beschickung und die Entladung der Werkstücke vorgesehen ist.

## Claims

- 1 - Cyclic process of combined machining and translating operations, in which:
- the fixed monospindle working units (3, 4, 5, 6 and 7) are assembled in line and carefully interpositioned, with the same and substantially accurate spacing (a) between the centre lines of the machining spindles;
- for the organization of this assembly of the monospindle working units, taking into account the number and the nature of the machining operations to be carried out on the workpieces, the number of the monospindle working units to be operated is determined by the ratio 2N-1, in which N is the number of the machining operations to be carried out on the workpieces, so that an uneven number of monospindle working units will be operated and that there will be in any case a central unit (5) on either side of which the same number of working units are mounted;
- the central unit (5) is arranged so that the last machining operation No N will be carried out by the spindle of said central unit; on one side of the central unit, and therefrom onwards, the units are arranged for carrying out the operations N-1, N-2...; on the other side of the central unit, and therefrom onwards, the units are arranged for carrying out the operations 1, 2... up to N-1; in this way, the configurations on either side of the central unit, while considered in the same direction, will be found to be identical;
- a table or a working plate (8) is shifted by means of translation-transfer in the same plane and relative to the monospindle working units, said table or working plate carrying as many positioning devices as there are operations to be carried out on the workpieces, the positioning centre lines of the workpieces being separated by accurate and substantially identical spacings (b) corresponding to the distances between centres (a) of the spindles of the monospindle working units;

- the workpiece or workpieces to be machined is or are shifted by translation past the monospindle working units, automatically and in accordance with a preestablished sequential order, in synchronized connection with the successive controls of the working units;

- a handling system (14) for the workpieces is actuated for positioning in succession each one of the workpieces upon one of the positioning devices and for taking off the workpiece on completion of the machining, the handling system being active for this purpose substantially within the area of the central working unit (5) by means of which the last machining operation is always carried out.

- 2- Automatic machining apparatus including a fixed bed or equivalent support (1) on which monospindle working units (3, 4, 5, 6, 7) are mounted fixedly, the centre lines between the spindles being separated by substantially accurate and identical intervals (a), with a table or working plate (8) mounted and equipped with means permitting said table or working plate to be moved by translation, and with handling means (14) for positioning in succession the workpieces to be machined and for taking then off on completion of the machining thereof, the apparatus being characterized in that the number of the working units is uneven or equal to two times the number of the machining operations to be carried out minus one, the last machining operation being performed by the central working unit (5), the unit or the units (3, 4 and 6, 7) on either side of the central working unit being arranged for carrying cut, in an alternate manner, the other machining operations on the workpiece, the table or working plate (8) being shifted in accordance with a pre-established sequential order relative to the monospindle working units, the means or devices (9, 11, 12) for positioning the workpieces to be machined being provided in a number corresponding to the number of the operations to be carried out on the workpieces, the intervals or gaps (b) between the centre lines of said means or devices (9, 11, 12) for positioning the workpieces being accurate and equal to one another as well as to the intervals or gaps between the centre lines of the spindles of the working units, and the handling means (14) being substantially active within the area of the central working unit (5) performing the last machining operation.

- 3 - Machining process as claimed in Claim 1, characterized in that the machining is carried out in accordance with a pre-established sequential order in which the alternate translations of the table or working plate (8) and of the workpieces positioned relative to the working units (3, 4, 5, 6, 7) are combined so that after a step of engagement of the workpieces in all the positioning locations of the table, there will be machined simultaneously as many different workpieces as there are machining operations to be preformed for one workpiece, one workpiece being completed by the central unit (5) and another workpiece being engaged by each sequential shifting from the Nth shifting (N = number of operations to be carried out for each workpiece).

- 4 - Machine as claimed in Claim 2, characterized in that the sequential shiftings in alternate translation of the working plate (8) and the indexing thereof at each station are provided by a digital control, so as to permit to adjust a displacement which corresponds to the drilling radius or other operation.

- 5 - Machine as claimed in Claim 2, characterized in that the indexings of the working plate (8) at each working station are obtained by means of a finger-like collapsible device (13), actuated by any well-known means to co-operate with notches (8a) of the working table or to escape from same.

- 6 - Machine as claimed in Claim 2, characterized in that the spindies of the monospindle units (3, 4, 5, 6, 7) are shifted in alternate translation by a digital control coupled and synchronized with the digital control of the working plate (8), in accordance with the predetermined operational cycle.

- 7 - Machine as claimed in Claim 2, characterized in that when a plurality of operations are performed on each workpiece by the same working unit, the workpieces are controlled rotatably by one or more driving indexers (12) with a digital control which is coupled and synchronized with the other digital controls, in accordance with the pre-determined operational cycle.

- 8 - Machine as claimed in Claim 2, in the application thereof for the machining on crankshafts (V), characterized in that said crankshafts are positioned in abutment on the working plate (8) through the intermediary of a support such as a Vee or a half-ring (9) on which there is abutted rotatably a bearing face (VI) of base bearing adjacent to the face to be machined, while the crankshaft is at the other end mounted by means of the plate (V2) thereof in a chcuk (11) which may be possibly connected to the dividders or indexers (12).

- 9 - Machine as claimed in Claim 8, characterized in that the bearing faces (VI) of the crankshafts placed within the support (9) thereof are maintained by pneumatic or hydraulic clamping means such as the flanges (10) linked hingedly to the supports and shifted in accordance with the pre-determined cycle.

- 10 - Automatic machining machine as claimed in Claim 2, characterized in that the working units are distributed equally on either side of a fictive central unit in a medial location, the purpose of which is the loading and the unloading of the workpieces only.

FIG.1

FIG.2

## FIG.3

## FIG.4

## FIG.5

## FIG.6

## FIG.7

0 100 291

FIG.8

FIG.9

FIG.10

FIG.11

FIG.12

FIG.13

5